(19) **Europäisches Patentamt / European Patent Office / Office européen des brevets**

(11) **EP 2 500 690 B1**

(12) **EUROPEAN PATENT SPECIFICATION**

(45) Date of publication and mention
of the grant of the patent:
**30.11.2016 Bulletin 2016/48**

(51) Int Cl.:
*G01C 3/18* *(2006.01)*      *G06T 7/00* *(2006.01)*
*G02B 7/30* *(2006.01)*      *G01C 3/24* *(2006.01)*

(21) Application number: **12159502.9**

(22) Date of filing: **14.03.2012**

(54) **Range finder and imaging device**

Abstandsmesser und Abbildungsvorrichtung

Télémètre et dispositif d'imagerie

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2011 JP 2011058426**

(43) Date of publication of application:
**19.09.2012 Bulletin 2012/38**

(73) Proprietor: **Ricoh Company, Ltd.**
**Tokyo 143-8555 (JP)**

(72) Inventor: **Kitajima, Tatsutoshi**
**Tokyo 143-8555 (JP)**

(74) Representative: **Leeming, John Gerard**
**J A Kemp**
**14 South Square**
**Gray's Inn**
**London WC1R 5JJ (GB)**

(56) References cited:
**US-A1- 2010 128 973      US-B1- 6 674 892**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

BACKGROUND

Technical Field

The present invention relates to a range finder configured to measure a distance to a subject to be photographed, and an imaging device having the range finder such as a digital still camera, a digital video camera, and the like.

Description of the Related Art

A digital still camera having a range finder in which an outer measurement triangulation system is applied is conventionally known as a digital still camera (referred to as a digital camera, hereinafter) having an autofocus (AF) function (see Japanese Patent Application Publication No.2002-90616).

The range finder using a triangulation system includes a pair of range-finding lenses disposed at a predetermined interval and a pair of planar range-finding imaging elements on which subject images are formed through the range-finding lenses, respectively, and is configured to obtain a distance to a subject by detecting a disparity between the subject images formed on the range-finding imaging elements based on pixel output signals output from the range-finding imaging elements, respectively.

The range finder using the outer measurement triangulation system as described in Japanese Patent Application Publication No. 2002-90616 includes a pair of range-finding lenses and a pair of range-finding imaging elements as units, respectively. For this reason, they are not shifted in the base length (a distance between optical axes of a pair of range-finding lenses) direction, but may be slightly shifted in the direction orthogonal to the base length direction.

A lens array having a pair of range-finding lenses is fixed in a housing by an adhesive agent. However, a pair of range-finding lenses (lens array) may be shifted in the direction orthogonal to the base length direction by the displacement of the fixed portion due to a significant change in a temperature environment or an impact.

Range-finding data having large errors may be output when a pair of range-finding lenses (lens array) is shifted in the direction orthogonal to the base length direction from a predetermined position.

US 2010/0128973 A1 discloses the pre-characterising features of claim 1.

US 6,674,892 B1 relates generally to stereo imaging.

SUMMARY

It is, therefore, an object of the present invention to provide a range finder and an imaging device which prevent range-finding data having large errors from being output when a pair of range-finding lenses (lens array) is shifted in the direction orthogonal to a base length direction.

In order to achieve the above object, one embodiment of the present invention provides a range finder as defined in the appended claims.

BRIEF DESCRIPTION OF THE DRAWINGS

The accompanying drawings are included to provide further understanding of the invention, and are incorporated in and constitute a part of this specification. The drawings illustrate embodiments of the invention and, together with the specification, serve to explain the principle of the invention.

FIG. 1 is a front view illustrating a digital camera as one example of an imaging device having a range finder according to Embodiment 1 of the present invention.
FIG. 2 is a block diagram illustrating a system configuration of the digital camera in Embodiment 1.
FIG. 3A is a schematic sectional view illustrating the range finder in Embodiment 1.
FIG. 3B is a plan view illustrating imaging elements of the range finder in Embodiment 1.
FIG. 4 is a schematic view illustrating a range-finding principle by the range finder.
FIG. 5 is a view illustrating one example illustrating a relationship between the shift amount of a standard block from a start position and a matching value.
FIGs. 6A, 6B are views each illustrating a procedure for obtaining a minimum matching value in an oblique subject.
FIGs. 7A, 7B are views each illustrating a procedure for obtaining a minimum matching value in a longitudinal subject.
FIGs. 8A, 8B are views each illustrating a procedure for obtaining a minimum matching value in a figure (face) subject.
FIGs. 9A, 9B are views each illustrating a procedure for obtaining a minimum matching value in a figure (face) subject.
FIG. 10 is a view illustrating a matching feature when a minimum matching value is obtained.

FIG. 11 is a view illustrating one example of a magnitude of a matching extreme value in each line position without vertical shift.

FIG. 12 is a view illustrating a position where a minimum matching value is obtained without vertical shift.

FIG. 13 is a view illustrating one example of a magnitude of a matching extreme value in each line position with vertical shift.

FIG. 14 is a view illustrating a position where a minimum matching value is obtained with vertical shift.

DETAILED DESCRIPTION OF THE PREFERRED EMBODIMENT

Hereinafter an embodiment of the present invention will be described with reference to the drawings.

[Embodiment 1]

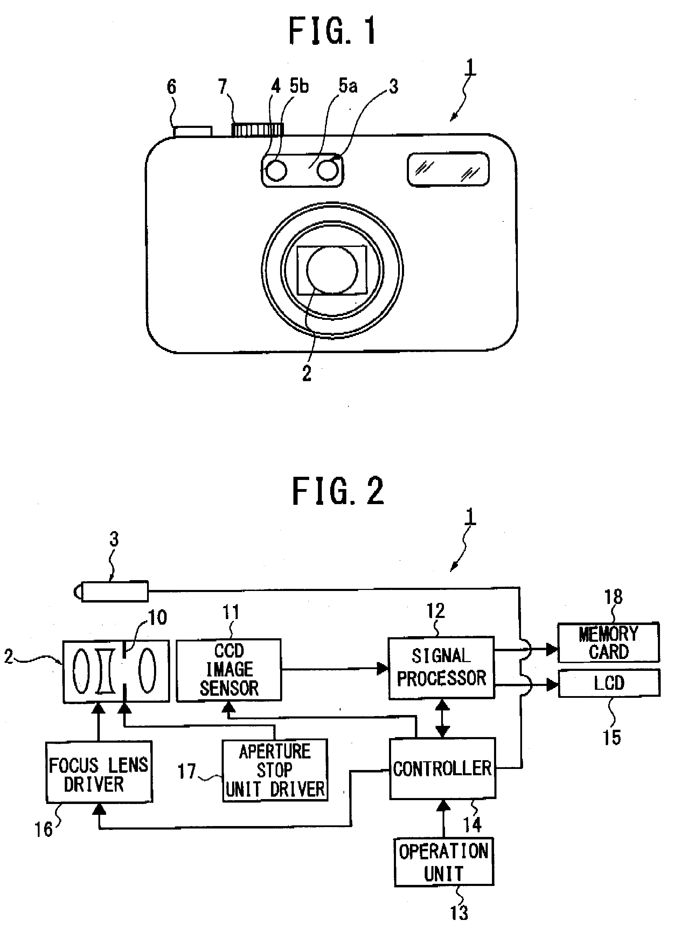

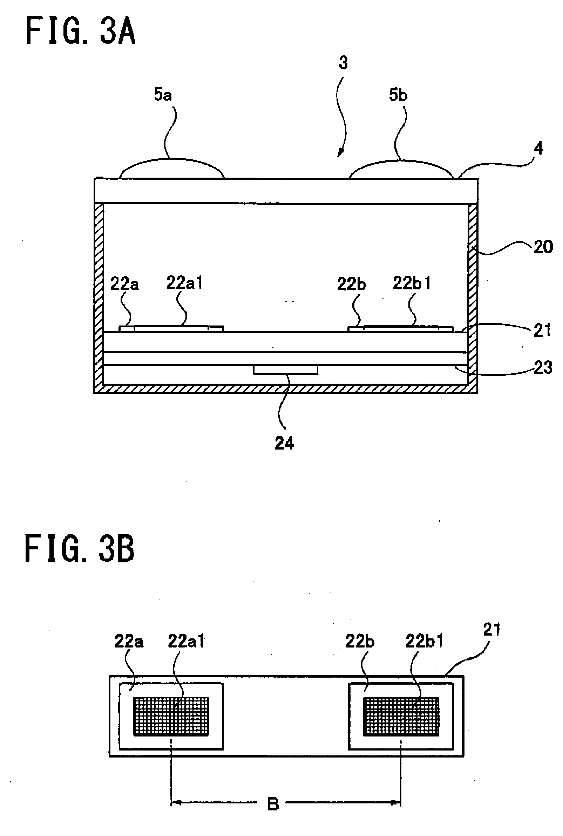

FIG. 1 is a front view illustrating a digital camera as one example of an imaging device having a range finder according to Embodiment 1 of the present invention. FIG. 2 is a block diagram illustrating a system configuration of a digital camera illustrated in FIG. 1. FIG. 3A is a schematic longitudinal sectional view illustrating the range finder. FIG. 3B is a plan view illustrating imaging elements of the range finder.

(External Configuration of Digital Camera)

As illustrated in FIG.1, a photographic lens 2, a front side lens array 4 of a range finder 3 and the like are disposed in a front face of a digital camera 1 according to Embodiment 1 of the present invention. A pair of range-finding lenses 5a, 5b provided at an interval with each other in a right-left direction is integrally formed on a surface of the lens array 4. The range finder 3 will be described in detail later. The photographic lens 2 and the range-finding lenses 5a, 5b have optical axes parallel to each other. A release button 6, a photographic mode switching button 7 and the like are provided in a top face of the digital camera 1.

(System Configuration of Digital Camera 1)

As illustrated in FIG.2, the digital camera 1 has the photographic lens 2 having a plurality of lens groups, an aperture stop unit 10 having a shutter function, a CCD image sensor 11 as an imaging element which has a light receiving surface on which a subject image is formed through the photographic lens 2, a signal processor 12 configured to perform digital processing on the pixel output signal output from the CCD image sensor 11, load the processed signal, and perform conversion processing on the processed signal into image data capable of being displayed and stored, a controller 14 configured to perform entire system control of the digital camera 1 by using a control program stored in a not-illustrated ROM based on operation input information from an operation unit 13 (release button 6, photographic mode switching button 7 (see FIG.1), and the like), a liquid crystal display monitor (LCD) 15 configured to display the image data generated in the signal processor 12, a focus lens driver 16 configured to drive focus lens groups of the photographic lens 2, an aperture stop unit driver 17 configured to drive the aperture stop unit, the outer measurement range finder 3 configured to measure a distance to the subject, and the like. The image data generated in the signal processor 12 is stored in a removable memory card 18. The liquid crystal display monitor (LCD) 15 is provided on a back face of the digital camera 1.

(Configuration of Range Finder 3)

As shown in FIGs.3A, 3B, the range finder 3 according to the present embodiment includes a housing 20 having an opening on a front side (upper side of FIG.3A), a lens array 4 made of a transparent resin material with which the pair of range-finding lenses 5a, 5b are integrally formed on the front side of the housing 20 in a row in the right-left direction of the digital camera 1, a thin-plate like substrate 21 disposed on a back face side (lower side of FIG.3A) of the housing 20, opposite to the lens array 4, a pair of planar (two-dimensional) imaging elements 22a, 22b for range-finding, which are integrally formed on the substrate 21 at predetermined intervals, and a circuit substrate 23 disposed in a back face of the substrate 21.

The two imaging elements 22a, 22b are disposed so as to face the range-finding lenses 5a, 5b, respectively. Imaging areas (light-receiving surface) 22a1, 22b1 of the imaging elements 22a, 22b are the same size as each other. A plurality of light-receiving elements (pixels) are arranged in a reticular pattern in each of the imaging areas (light-receiving surfaces) 22a1, 22b1, In FIG. 3B, B denotes a base length between the imaging elements 22a, 22b (imaging areas 22a1, 22b1).

An imaging element such as a CCD, a CMOS or the like integrally formed on a semiconductor wafer by a known semiconductor process is cut out to be used as a pair of imaging elements 22a, 22b integrally provided on the substrate 21.

Here, two consecutive imaging elements are cut out from a plurality of imaging elements formed on a semiconductor wafer, and the two cut out consecutive imaging elements are used as a pair of imaging elements. The two imaging elements on both sides are used as a pair of imaging elements when three or more consecutive imaging elements are cut out from a plurality of imaging elements formed on a semiconductor wafer,. In this way, the respective imaging elements 22a, 22b are held in a well positioned state by using the two cut out or more cut out consecutive imaging elements formed on a semiconductor wafer as a pair of imaging elements 22a, 22b.

A pair of range-finding lenses 5a, 5b has optical axes parallel to each other, and is located such that a diagonal center of each imaging area 22a1, 22b1 of the imaging element 22a, 22b conforms with the optical axis of each range-finding lens 5a, 5b. Each range-finding lens 5a, 5b includes a focal length in which a subject light incident on each range-finding lens 5a, 5b images on each imaging area 22a1, 22b1. Each range-finding lens 5a, 5b is held in a well positioned state because a pair of range-finding lenses 5a, 5b is integrally formed with the lens array 4 made of a transparent resin material.

For example, a range-finding calculator 24 is provided on the circuit substrate 23 and is configured to load the pixel output signal output from each imaging area 22a1, 22b1 of the imaging element 22a, 22b, calculate a deviation between the subject images formed on the imaging areas, that is, disparity, and calculate a distance to the subject by a triangulation system.

The distance information calculated in the range-finding calculator 24 is output to the controller 14. The control unit 14 outputs a driving control signal to the focus lens driver 16 so as to focus on the subject based on the input distance information.

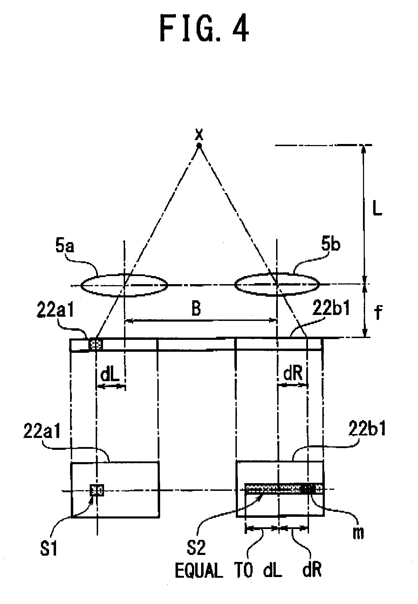

Hereinafter, the principle of the triangulation system in the range finder 3 will be simply described with reference to FIG. 4.

A distance L between each range-finding lens 5a, 5b and a subject x is calculated by the following equation (1) with a base length B of a distance between a pair of range-finding lenses 5a, 5b (a pair of imaging areas 22a1, 22b1) and a focal length f of each range-finding lens 5a, 5b as illustrated in FIG. 4 where a distance between a position on an image data according to a subject image formed on the imaging area 22a1 by the left range-finding lens 5a and a base length standard is dL, and a distance between a position on image data according to a subject image formed on the imaging area 22b1 by the right range-finding lens 5b and a base length standard is dR.

$$L = (B \times f) / (dL + dR) \quad \cdots (1)$$

Therefore, the distance L to the subject x is able to be calculated by measuring the distances dL, dR from the base length standard because the base length B and the focal distance f of each range-finding lens 5a, 5b are known.

Hereinafter, a method of specifying the distances dL, dR from the base length standard will be described. In the following description, an image by the left range-finding lens 5a is referred to as a standard image and an image by the light range-finding lens 5b is referred to as a comparative image.

At first, an image block for range-finding in the standard image is extracted as a standard block S1 of 8 x 8 pixels, for example. Next, a comparative block S2 is extracted from the same position as the standard block S1. Then, a matching calculation is performed from the left end of the comparative block to a block having the same size (8 × 8 pixels) as the standard block S1. The matching value M by the matching calculation is obtained by the following equation (2).

$$M = \Sigma\Sigma \left( | A[x][y] - B[x][y] | \right) \quad \cdots (2)$$

In addition, x is 0-7 and y is 0-7 in the equation (2). A is an $8 \times 8$ image arrangement of the standard block S1 and B is an $8 \times 8$ image block extracted from the comparative block S2.

The matching calculation is performed by using the equation (2) in a position horizontally shifted by one pixel in the right direction in the comparative block S2. The matching calculation is the sum of the differences of respective pixels, and the matching value is decreased when the correlation is high. The position where the matching value M becomes a minimum value as a result of the repetition of the matching calculation by using the equation (2) while shifting the block by one pixel is set as an area m.

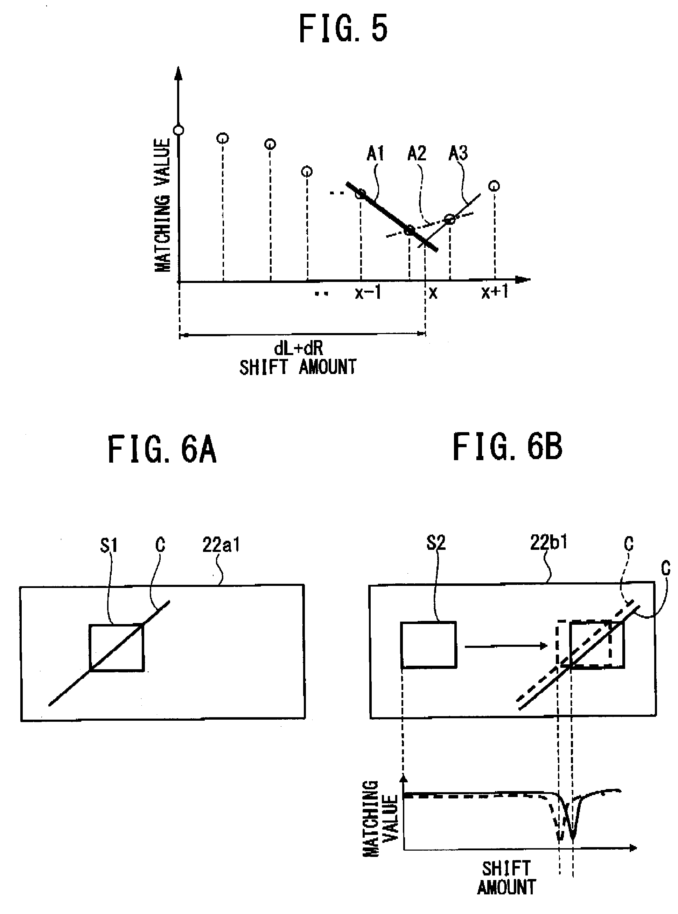

FIG. 5 illustrates one example of the relationship between a shift amount of the standard block S1 from the start position and a matching value in the matching calculation using the equation (2). In addition, the horizontal axis illustrates a shift amount and a vertical axis illustrates a matching value.

The shift amount in which the matching value M becomes a minimum value is calculated by complementing between pixel blocks. The complementing calculation uses a position in the x direction in which the matching value M becomes a minimum value and the inclinations around that position (x - 1, x + 1).

In FIG. 5, the inclination from x - 1 to x is illustrated by the thick solid line A1 and the inclination from x to x + 1 is illustrated by the dashed line A2. Based on the comparison between the inclination by the solid line A1 and the inclination by the dashed line A2, a straight line with a value multiplied by -1 relative to the steeper inclination (large inclination) as an inclination is applied to the position in the x direction (x + 1 in FIG. 5) of the shift amount illustrating a gradual inclination (solid line A3).

The intersection of the solid lines A1, A3 is set to the minimum value of the complemented matching value M. According to the above-described complementing process, the pixel interval is, for example, 2 $\mu$m. As described above, an accuracy more than the pixel interval is able to be ensured by the complementing process, so it is necessary to maintain an error in physical positions between the two original imaging element images with 1 $\mu$m order.

Therefore, in the range finder 3 of the present embodiment illustrated in FIG. 3A, the two or more cut out consecutive imaging elements formed on a semiconductor wafer are used as a pair of imaging elements 22a, 22b in order to maintain the positional relationship between a pair of imaging elements 22a, 22b (imaging areas 22a1, 22b1) with 1 $\mu$m order accuracy. A pair of range-finding lenses 5a, 5b is integrally formed with the lens array 4 made of a transparent resin material as described above.

The lens array 4 having a pair of range-finding lenses 5a, 5b and the imaging element substrate 21 having a pair of imaging elements 22a, 22b are fixed in predetermined positions of the housing 20 through an adhesive agent, so that the shift of the lens array 4 and the imaging element substrate 21 in the base length direction is prevented. However, the fixed portions by means of an adhesive agent may be shifted due to a significant change in a temperature environment or an impact, so that the lens array 4 having a pair of range-finding lenses 5a, 5b may be shifted in the vertical direction relative to the base length direction. The right and left images formed on a pair of imaging elements 22a, 22b (imaging areas 22a1, 22ab) are shifted relative to each other in the vertical direction relative to the base length direction if a pair of range-finding lenses 5a, 5b (lens array 4) is shifted in the vertical direction relative to the base length direction.

The shift in the vertical direction relative to the base length direction results in a range-finding error when range-finding an oblique subject (oblique contrast), for example.

As illustrated in FIGs. 6A, 6B, for example, the matching calculation is performed to obtain the minimum matching value while shifting the comparative block S2 in the same position as the right imaging area 22b1 in the arrow direction (base length direction) when an oblique image c is formed near the standard block S1 in the left imaging area 22a1.

The oblique image c which is the same as the one in the left imaging area is formed in the same position in the right imaging area 22b1 as illustrated by the dashed line when there is no shift between the respective images (oblique images c) of the left and right side imaging areas 22a1, 22b1 in the vertical direction relative to the base length direction. Consequently, the minimum matching value is obtained in the position illustrated by the dashed line, so an accurate shift amount is obtained.

However, as illustrated in FIGs. 6A, 6B, the oblique image c is formed in the position illustrated by the solid line when the image is shifted by one pixel line in the vertical direction relative to the base length direction in the right imaging area 22b1. For this reason, the matching calculation is performed to obtain the minimum matching value, and the oblique image c is formed in the position illustrated by the solid line which is shifted by one image from the correct position.

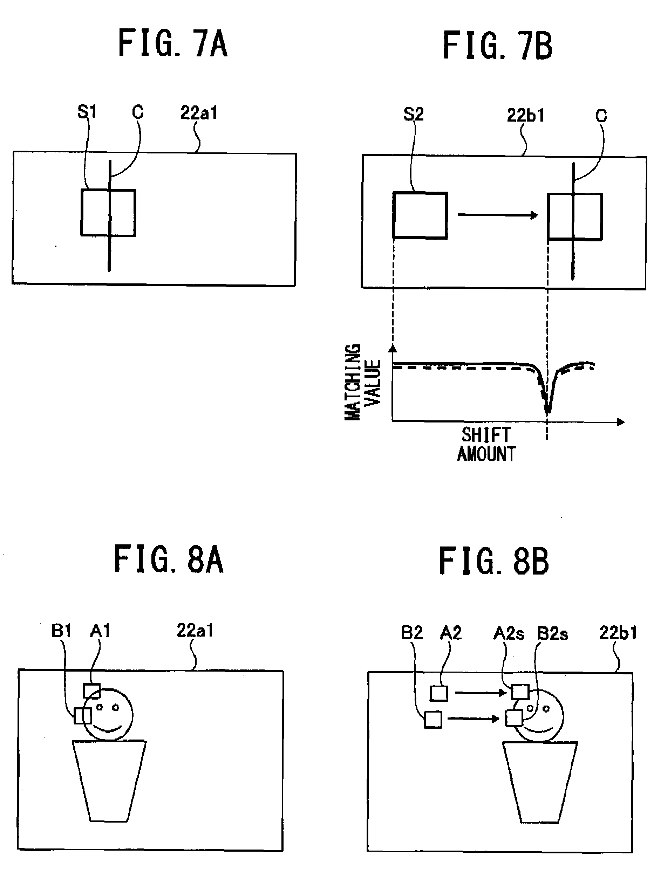

On the other hand, as illustrated in FIGs. 7A, 7B, for example, when a longitudinal image c is formed near the standard block S 1 in the left imaging area 22a1, the images illustrated by the solid and dashed lines are formed in the substantially same positions even if the image in the right imaging area 22b1 is shifted by one pixel line in the vertical direction relative to the base length direction, so the minimum matching value error is very small.

In the range finder 3 of the present embodiment, the range-finding calculator 24 is configured to perform the searching of the comparative image in the same direction as the base length while shifting in the direction vertical to the base length by a predetermined position in the searching of the comparative image having the high correlation in the other imaging data relative to the standard image, to determine whether or not the relative positional difference between the standard image and the comparative image in the imaging data calculated by the searching is small, to use the calculated relative positional difference for the range-finding calculation when the result is smaller than a predetermined value and not to use the calculated relative positional difference for the range-finding calculation when the result is larger than a predetermined value.

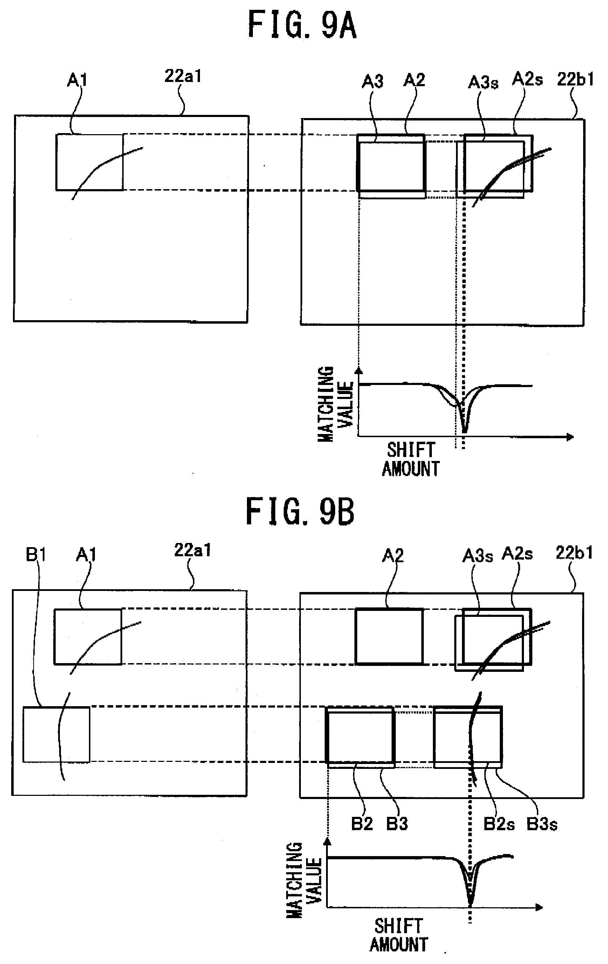

FIG. 9A illustrates an image (standard image) formed in the left imaging area 22a1 with a head portion A1 and a cheek portion B1 as range-finding subjects. Then, the searching is performed while shifting in the arrow direction (base length direction) from the positions (A2, B2) which are the same as those of the head and cheek portions A1, B1 in the right imaging area 22b1, and the calculation is performed to determine whether or not the relative positional difference (hereinafter, referred to as a minimum matching value) between the standard image and the comparative image in the imaging data calculated by the searching is smaller than a predetermined value, so as to obtain the minimum positions (A2s, B2s) of the matching values.

In this case, as illustrated in FIGs. 9A, 9B, the minimum positions (A3s, B3s) of the matching values are obtained by shifting from the blocks A3, B3 below the blocks A2, B2 by one pixel line. In this case, the oblique subject as the head portion A1 includes a large shift in the positions A2s, A3s which become a minimum value as the matching property. On the other hand, the longitudinal subject as the cheek portion B1 has a small shift in the positions B2s, B3s which become a minimum value as the matching graph B.

As described above, it is possible to adopt a range-finding result of the cheek portion B1 as a longitudinal subject having a small range-finding error and not to adopt a range-finding result of the head portion A1 as an oblique subject having a large range-finding error when the head portion A1 and the cheek portion B1 of a human face are used as range-finding subjects if a pair of range-finding lenses 5a, 5b (lens array 4) is shifted in the vertical direction relative to the base length direction due to a significant change in a temperature environment or an impact.

[Embodiment 2]

In Embodiment 1, as illustrated in FIGs. 6A, 6B, two types of comparative blocks are set. One comparative block is set in the image line position which is the same as the one in the standard block, and the other comparative block is set in the position below the image line position by one line in the direction orthogonal to the base length direction. However, in this embodiment, the comparative block is able to be set above and below the image line position by one pixel line or two or more pixel lines in the direction orthogonal to the base length direction. The other configuration is the same as that in Embodiment 1.

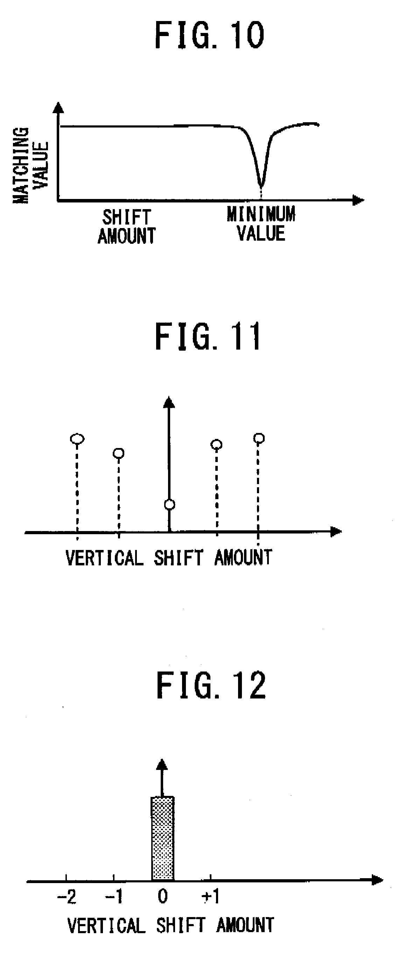

The minimum matching value illustrated in FIG. 10 is obtained by the searching of each line position with the shifted comparative block. Then, the magnitude of the minimum matching value is plotted in each line position as illustrated in FIG. 11.

The minimum matching value is obtained in the line position of the original comparative block as illustrated in FIG. 11 regardless of the longitudinal or oblique subjects when there is no shift in the respective images formed in the left and right imaging areas in the direction orthogonal to the base length direction. Such a calculation process is performed in each divided image area. For this reason, the number of image areas obtaining the minimum matching value in the original comparative block line position is maximized as illustrated in FIG. 12 if the frequency of the line position of the comparative block in which the matching value becomes a minimum value is counted.

In contrast, hereinbelow a case will be described when the respective images formed in the right and left imaging areas are shifted in the direction orthogonal to the base length direction.

The longitudinal subject includes a matching property illustrated in FIG. 11 when the respective images formed in the right and left imaging areas are shifted in the direction orthogonal to the base length direction. Therefore, when the frequency of the line position of the comparative block in the minimum matching value is obtained, the shift amount in the direction orthogonal to the base length direction is counted in the zero position.

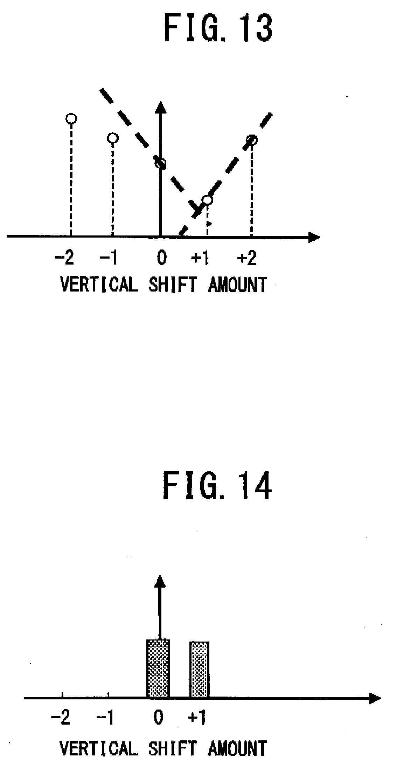

However, regarding the non-longitudinal subject, the minimum matching value is obtained in the line position corresponding to the shift in the direction orthogonal to the base length direction as illustrated in FIG. 13 in the searching of respective line positions with the shifted block. In the example illustrated in FIG. 13, the minimum matching value is obtained in + 1 pixel line.

Then, counting the frequency of the line position of the comparative block in which the minimum matching value is obtained in each divided image area, the frequency in the zero position of the shift amount in the direction orthogonal to the base length direction by the longitudinal subject and the frequency in + 1 position corresponding to the shift in the direction orthogonal to the base length direction are increased as illustrated in FIG. 14.

In addition, without using the frequency in the zero position of the shift amount in the direction orthogonal to the base length direction, if the shift amount of the vertical line in which the frequency is larger than the previously set predetermined number is obtained in addition to the frequency in the zero position, that frequency is stored in a storing portion of a camera as the vertical shift amount of the right and left images. Then, in the subsequent disparity searching, the comparative block with the newly stored vertical shift amount is set as the searching line of the base relative to the standard block. The matching searching by the blocks having different image lines is able to be sequentially performed with software, or simultaneously performed with hardware

The digital camera of each embodiment is configured to perform the focusing operation based on the range-finding information obtained by the outer measurement range finder. However, the range finder of each embodiment is able to be applied to a digital camera configured to perform autofocusing control from an imaging signal loaded from an imaging element through a photographic lens while performing a focusing operation based on the range-finding information obtained in an outer measurement range finder.

In each embodiment, the range finder according to the present invention is applied to a digital camera. However, the range finder is able to be applied to a digital video camera, a camera for a vehicle, a camera for a portable device and a monitoring camera and the like.

# EP 2 500 690 B1

According to the range finder and the imaging device of the embodiments of the present invention, the distance calculator is configured to perform the searching of the comparative image in the same direction as the base length while shifting in the direction vertical to the base length by a predetermined position in the searching of the comparative image having the high correlation in the other imaging data relative to the standard image, to determine whether or not the relative positional difference between the standard image and the comparative image in the imaging data calculated by the searching is small, to use the calculated relative positional difference for the range-finding calculation when the result is smaller than a predetermined value and not to use the calculated relative positional difference for the range-finding calculation when the result is larger than a predetermined value.

Consequently, it is possible to prevent range-finding data having a large error being output even if the optical systems are shifted in the vertical direction relative to the base length direction due to a large change in a temperature environment or an impact.

Although the embodiments of the present invention have been described above, the present invention is not limited thereto. It should be appreciated that variations may be made in the embodiments described by persons skilled in the art without departing from the scope of the present invention.

## Claims

1. A range finder (3), comprising:

   a plurality of imaging elements (22a, 22b);
   a plurality of optical systems (5a, 5b) configured to form subject images on the imaging elements, respectively; and
   a distance calculator (24) configured to calculate a distance to a subject based on imaging data output from the imaging elements on which the subject image is formed, wherein

   the distance calculator (24) is configured to search a position of a first comparative image (A2s, B2s) having a high correlation with a standard image (A1, B1) in imaging data output from the other (imaging element (22b) relative to the standard image (A1, B1) in an area obtained from imaging data output from one imaging element (22a), the position of the comparative image (A2s, B2s) being searched in a direction of a base length (B) of the imaging elements, to calculate a first relative positional difference between the standard image (A1, B1) and the first comparative image (A2s, B2s) in the imaging data, and to calculate the distance to the subject by a triangulation system based on the first calculated relative positional difference, and
   the distance calculator (24) is configured to perform searching of a second comparative image (A3s,B3s) in the same direction as the base length (B) while shifting in a
   direction vertical to the base length by a predetermined position, and to calculate a second relative positional difference between the standard image (A1, B1) and the second
   comparative image (A3s, B3s),
   **characterized in that** the distance calculator (24) is configured to determine whether or not the second relative positional difference is shifted from the first relative positional difference by an amount smaller than a predetermined value, to use the calculated relative positional differences for range-finding calculation when the shift in the first and second calculated relative positional differences is smaller than the predetermined value and not to use the calculated relative positional differences for range-finding calculation when the shift in the first and second calculated relative positional differences is larger than the predetermined value.

2. The range finder according to Claim 1, wherein
   the distance calculator (24) is configured to perform searching of the second comparative image for multiple times in the same direction as the base length while sequentially shifting in the direction vertical to the base length for each predetermined position.

3. An imaging device including an imaging element (11) on which an image of a subject is formed via a photographic lens (2), configured to generate image data based on a signal output from the imaging element (11), comprising:

   the range finder (3) configured to measure the distance to the subject according to Claim 1 or Claim 2.

**Patentansprüche**

1. Entfernungsmesser (3) mit:

    einer Vielzahl von Abbildungselementen (22a, 22b),
    einer Vielzahl von optischen Systemen (5a, 5b),
    die konfiguriert sind, um auf den Abbildungselementen jeweils Motivbilder zu bilden; und
    einer Abstandsberechnungsvorrichtung (24), die konfiguriert ist, um einen Abstand zu einem Motiv auf der Basis der Abbildungsdaten zu berechnen, die von den Abbildungselementen ausgegeben werden, auf denen das Motivbild ausgebildet ist, wobei

    die Abstandsberechnungsvorrichtung (24) konfiguriert ist, um eine Position eines ersten Vergleichsbildes (A2s, B2s) zu suchen, das eine hohe Korrelation mit einem Standardbild (A1, B1) beim Abbilden von Daten aufweist, die von dem anderen Abbildungselement (22b) relativ zu dem Standardbild (A1, B1) in einem Bereich ausgegeben werden, das anhand von Bilddaten gewonnen wird, die von einem Abbildungselement (22a) ausgegeben werden,
    die Position des Vergleichsbildes (A2s, B2s) in einer Richtung einer Basislänge (B) der Abbildungselemente gesucht wird, um eine erste relative Positionsdifferenz zwischen dem Standardbild (A1, B1) und dem ersten Vergleichsbild (A2s, B2s) in den Abbildungsdaten zu berechnen, und um den Abstand zum Motiv durch ein Triangulationssystem auf der Basis der ersten berechneten relativen Positionsdifferenz zu berechnen, und
    die Abstandsberechnungsvorrichtung (24) konfiguriert ist, um die Suche eines zweiten Vergleichsbildes (A3s, B3s) in der gleichen Richtung wie die Basislänge (B) durchzuführen,
    während des Verschiebens in eine Richtung vertikal zur Basislänge um eine vorgegebene Position, und um eine zweite relative Positionsdifferenz zwischen dem Standardbild (A1, B1) und dem zweiten Vergleichsbild (A3s, B3s) zu berechnen,
    **dadurch gekennzeichnet, dass**
    die Abstandsberechnungsvorrichtung (24) konfiguriert ist, um zu bestimmen, ob die zweite relative Positionsdifferenz von der ersten relativen Positionsdifferenz um ein Maß verschoben ist, das kleiner ist als ein vorgegebener Wert, oder nicht,
    die berechneten relativen Positionsdifferenzen zur Berechnung der Entfernungsmessung zu verwenden, wenn die Verschiebung in der ersten und der zweiten relativen Positionsdifferenz kleiner ist als ein vorgegebener Wert, und die berechnete relative Positionsdifferenz zur Berechnung der Entfernungsmessung nicht zu verwenden, wenn die Verschiebung in der ersten und der zweiten relativen Positionsdifferenz größer ist als ein vorgegebener Wert.

2. Entfernungsmesser nach Anspruch 1, wobei
    die Abstandsberechnungsvorrichtung (24) konfiguriert ist, um eine Suche des zweiten Vergleichsbildes für mehrere Male in der gleichen Richtung wie die Basislänge durchzufiihren, während des aufeinander folgenden Verschiebens in die Richtung vertikal zur Basislänge für jede vorgegebene Position.

3. Abbildungsvorrichtung mit einem Abbildungselement (11), auf dem ein Bild eines Motivs über eine photografische Linse (2) ausgebildet ist, die konfiguriert ist, um Bilddaten auf der Basis eines Signals zu erzeugen, das von dem Abbildungselement (11) ausgegeben wird, mit:

    einem Entfernungsmesser (3), der konfiguriert ist, um den Abstand zu dem Motiv nach Anspruch 1 oder Anspruch 2 zu messen.

**Revendications**

1. Télémètre (3) comprenant :

    une pluralité d'éléments d'imagerie (22a, 22b) ;
    une pluralité de systèmes optiques (5a, 5b) conçus pour former des images de sujets sur les éléments d'imagerie, respectivement ; et
    un calculateur de distance (24) conçu pour calculer une distance par rapport à un sujet sur la base de données d'imagerie générée par les éléments d'imagerie sur lesquels l'image sujet est formée,

    le calculateur de distance (24) étant conçu pour rechercher une position d'une première image comparative (A2s, B2s) ayant une corrélation élevée avec une image standard (A1, B1) dans des données d'imagerie générées par les autres éléments d'imagerie (22b), relatives à l'image standard (A1, B1), dans une zone obtenue à partir de données d'imagerie générées par un élément d'imagerie (22a), la position de l'image comparative (A2s, B2s) étant recherchée dans une direction d'une longueur de base (B) des éléments d'imagerie, pour calculer une première différence de position relative entre l'image standard (A1, B1) et la première image comparative (A2s, B2s) dans les données d'imagerie, et pour calculer la distance par rapport au sujet par un système de triangulation sur la base de la première de position relative calculée et

le calculateur de distance (24) étant conçu pour effectuer la recherche d'une deuxième image comparative (A3s, B3s) dans la même direction que la longueur de base (B) tout en se décalant dans une direction verticale par rapport à la longueur de base d'une position prédéterminée et pour calculer une deuxième différence de position relative entre l'image standard (A1, B1) et la deuxième image comparative (A3s, B3s),

**caractérisé en ce que** le calculateur de distance (24) est conçu pour déterminer si la deuxième différence de position relative est décalée ou non par rapport à la première différence de position relative d'une quantité inférieure à une valeur prédéterminée, pour utiliser les différences de positions relatives calculées pour un calcul de télémétrie lorsque le décalage dans les première et deuxième différences de position relatives calculées est inférieure à la valeur prédéterminée et ne pas utiliser les différences de positions relatives calculées pour un calcul de télémétrie lorsque le décalage dans les première et deuxième différences est supérieure à la valeur prédéterminée.

2. Télémètre selon la revendication 1, dans lequel

le calculateur de distance (24) est conçu pour effectuer une recherche de la deuxième image comparative pour plusieurs instants dans la même direction que la longueur de base tout en se décalant séquentiellement dans la direction verticale par rapport à la longueur de base pour chaque position prédéterminée.

3. Dispositif d'imagerie comprenant un élément d'imagerie (11) sur lequel une image d'un sujet est formée via une lentille photographique (2), conçue pour générer des données d'images sur une sortie de signal provenant de l'élément d'imagerie (11), comprenant :

le télémètre (3) conçu pour mesurer la distance par rapport au sujet selon la revendication 1 ou la revendication 2.

# FIG. 1

# FIG. 2

# FIG. 3A

# FIG. 3B

# FIG. 4

# FIG. 5

# FIG. 6A

# FIG. 6B

# FIG. 7A

S1　C　22a1

# FIG. 7B

S2　22b1　C

MATCHING VALUE

SHIFT AMOUNT

# FIG. 8A

B1　A1　22a1

# FIG. 8B

B2　A2　A2s　B2s　22b1

# FIG. 9A

A1     22a1           A3   A2     A3s   A2s   22b1

MATCHING VALUE

SHIFT
AMOUNT

# FIG. 9B

B1   A1     22a1         A2     A3s   A2s    22b1

B2   B3         B2s   B3s

MATCHING VALUE

SHIFT
AMOUNT

# FIG. 10

# FIG. 11

# FIG. 12

# FIG. 13

VERTICAL SHIFT AMOUNT

-2    -1    0    +1    +2

# FIG. 14

VERTICAL SHIFT AMOUNT

-2    -1    0    +1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002090616 A
- US 20100128973 A1
- US 6674892 B1